# EUROPEAN PATENT APPLICATION

(11) **EP 4 718 755 A1**
(43) Date of publication of application: **01.04.2026**
(21) Application number: 24809991.3
(22) Date of filing: 27.02.2024
(51) Int. Cl.: H04L 1/00

(54) **DATA PROCESSING METHOD, NETWORK-SIDE DEVICE AND STORAGE MEDIUM**

(30) Priority: 25.05.2023 CN 202310611791
(71) Applicant: ZTE CORPORATION, Shenzhen, Guangdong 518057 (CN)
(72) Inventor: YANG, Jian, Shenzhen, Guangdong 518057 (CN); LIU, Feng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/078859
(87) International publication number: WO 2024/239742

(57) **Abstract**

The present application belongs to the technical field of communications. Disclosed are a data processing method, a network-side device and a storage medium. The method comprises: receiving a data sequence (102), wherein the data sequence comprises a plurality of types of blocks, and block types comprise a first flag block, a data block and a second flag block; determining a block having an error from among the first flag block, the data block and the second flag block (104); and processing the data sequence according to a block type corresponding to the block having an error (106).

## Description

### CROSS REFERENCE TO RELATED APPLICATIONS

This application claims priority to Chinese Patent Application No. 202310611791.0 filed on May 25, 2023, entitled "DATA PROCESSING METHOD, NETWORK-SIDE DEVICE AND STORAGE MEDIUM", the entirety of which is incorporated herein by reference.

### TECHNICAL FIELD

The present application belongs to the technical field of communications, and specifically relates to a data processing method, a network-side device and a storage medium.

### BACKGROUD

It is a service demand at present to provide low-latency, hard-isolated bearer technology for low-rate, fine-granularity services. One of the current bearer solutions for low-rate or fine-granularity services is to use a physical coding sublayer (PCS) data format defined by IEEE 802.3 as an encapsulation format for low-rate, fine-granularity services, where the PCS data format consists of a start block (S block), L data blocks (D block), and a termination block (T block). A 64-bit/66-bit (64B/66B) block includes a synchronization header (sync header) of 2 bits and payload of 64 bits. When the 2-bit sync header is 0b01, it indicates that the 64B/66B block is a data block; or when the 2-bit sync header is 0b10, it indicates that the 64B/66B block is a control block, such as S block and T block.

In some scenarios, the data format of some service data is also a PCS data format (inner-layer), that is, the data format of the service data also consists of an S block, a D block and a T block. When the service data is encapsulated, the service data in such data format is re-encapsulated into a channel layer (outer-layer) by using the PCS encapsulation format. Due to the abnormity such as error codes at the bottom layer, at least one of the S block, D block and T block of the outer-layer may have an error and become an error block, and the data in the corresponding S block, D block and T block in the inner-layer will also be affected. However, at present, when receiving a data sequence encapsulated in the PCS data format, the receiving end uses the data normally regardless of whether there is an error block in the data sequence, thereby causing adverse effects. Therefore, those skilled in the related art needs to deal with the technical problem that there is an error block in the data sequence, encapsulated in the PCS data format, received by the receiving end.

### SUMMARY

The embodiments of the present application provide a data processing method, a network-side device, and a storage medium, which can solve the problem that there is an error block in the data sequence, encapsulated in the PCS data format, received by the receiving end.

In a first aspect, embodiments of the present application provide a data processing method, the method includes: receiving a data sequence, wherein the data sequence includes a plurality of types of blocks, and block types include a first flag block, a data block and a second flag block; determining a block having an error from among the first flag block, the data block and the second flag block; and processing the data sequence according to a block type corresponding to the block having an error.

Optionally, determining the block having an error from among the first flag block, the data block and the second flag block includes: determining a block having a sync header error from among the first flag block, the data block and the second flag block as the block having an error; or determining a block having a type field error from among the first flag block and the second flag block as the block having an error.

Optionally, prior to processing the data sequence according to the block type corresponding to the block having an error, the method further includes: determining the block type according to an expected position of a 64B/66B block.

Optionally, determining the block type according to the expected position of the 64B/66B block includes: determining a type of a previous 64B/66B block or a type of a next 64B/66B block according to a type of a current 64B/66B block, or determining a type of the 64B/66B block according to whether the 64B/66B block comprises an overhead, or determining a type of the 64B/66B block according to a structure of a data sequence, or determining a type of the 64B/66B block according to a length of a data sequence.

Optionally, the block type further includes an error block, the method further includes: determining the error block as a block having an error.

Optionally, processing the data sequence according to the block type corresponding to the block having an error includes: replacing, upon the condition that a block received at the expected position should be a second flag block in the data sequence but is actually an error block in the data sequence, a corresponding inner-layer block or fine-granularity layer service with an error block when content of the inner-layer block or fine-granularity layer service of the second flag block is recovered; or replacing, upon the condition that a block received at the expected position should be a data block in the data sequence but is actually an error block, a corresponding inner-layer block or fine-granularity layer service with an error block when content of the inner-layer block or fine-granularity layer service of the data block is recovered .

Optionally, processing the data sequence according to the block type corresponding to the block having an error includes: upon the condition that a block received at the expected position should be a first flag block in the data sequence but is actually an error block, discarding the data sequence, or continuing to process other blocks of the data sequence, or replacing a corresponding inner-layer block or fine-granularity layer service with the error block when content of the inner-layer block or a fine-granularity layer service of the first flag block is recovered.

Optionally, the first flag block contains an overhead, and processing the data sequence according to the block type corresponding to the block having an error includes: upon the condition that the block type corresponding to the block having an error is a first flag block, extracting an overhead from the first flag block; and in the case that a cyclic redundancy check in the overhead is correct, extracting the overhead or payload in the first flag block for processing; or in the case that a cyclic redundancy check in the overhead is incorrect, discarding the data sequence, or replacing the first flag block with an error block, or discarding the overhead and continuing to process a payload.

Optionally, processing the data sequence according to the block type corresponding to the block having an error includes: upon the condition that the block type corresponding to the block having an error is a first flag block, extracting data content from the first flag block for processing; or replacing the block having an error with an error block; or replacing a corresponding inner-layer block or fine-granularity layer service with an error block when content of an inner-layer block or fine-granularity layer service of the first flag block is recovered.

Optionally, processing the data sequence according to the block type corresponding to the block having an error includes: upon the condition that the block type corresponding to the block having an error is a second flag block, extracting data content from the second flag block for processing; or replacing the block having an error with the error block; or replacing a corresponding inner-layer block or fine-granularity layer service with an error block when content of the inner-layer block or the fine-granularity layer service of the second flag block is recovered.

Optionally, the second flag block contains an overhead, and processing the data sequence according to the block type corresponding to the block having an error includes: upon the condition that the block type corresponding to the block having an error is the second flag block, extracting an overhead from the second flag block; and in the case that a cyclic redundancy check in the overhead is correct, extracting the overhead or payload in the second flag block for processing; or in the case that a cyclic redundancy check in the overhead is incorrect, discarding the data sequence, or replacing the second flag block with an error block, or discarding the overhead and continuing to process a payload.

Optionally, processing the data sequence according to the block type corresponding to the block having an error includes: upon the condition that the block type corresponding to the block having an error is a data block and the data block is a first data block in the data sequence, extracting an overhead from the first data block; and in the case that a cyclic redundancy check in the overhead is correct, extracting the overhead or payload in the first data block for processing; or in the case that a cyclic redundancy check in the overhead is incorrect, replacing the data block with an error block, or discarding an overhead and continuing to process a payload; or upon the condition that another data block other than the first data block in the data sequence has an error, extracting data content from the other data block for processing, or replacing the other data block with an error block, or replacing a corresponding inner-layer block or fine-granularity layer service with an error block when content of the inner-layer block or fine-granularity layer service of the other data block is recovered.

Optionally, a data format of service data corresponding to the data sequence is a physical coding sublayer data format, the service data comprises a plurality of data blocks, the first flag block and the second flag block of the data sequence contain at least one data block of the service data, and after determining a block having an error from among the first flag block, the data block and the second flag block, the method further includes: marking data content of a data block of service data corresponding to the block having an error as erroneous.

Optionally, after processing the data sequence according to the block type corresponding to the block having an error, the method further includes: replacing, upon the condition that a corresponding inner-layer block or fine-granularity layer service has a type field error or a sync header error when the inner-layer block or fine-granularity layer service of the first flag block, the data block or the second flag block is recovered, the corresponding inner-layer block or fine-granularity layer service with an error block.

Optionally, the first flag block is a start block, and the second flag block is a termination block.

In a second aspect, embodiments of the present application provide a data processing device, the device includes: a receiving module for receiving a data sequence, wherein the data sequence includes a plurality of types of blocks, and block types include a first flag block, a data block and a second flag block; an execution module for determining a block having an error from among the first flag block, the data block and the second flag block; and a processing module for processing the data sequence according to a block type corresponding to the block having an error.

In a third aspect, embodiments of the present application provide a network-side device, the network-side device includes a processor, a memory, and a program or instruction that is stored on the memory and is executable on the processor, and the program or instruction, when executed by the processor, implements steps of the method of the first aspect.

In a fourth aspect, embodiments of the present application provide a readable storage medium, the readable storage medium stores a processor and a memory thereon, and the program or instruction, when executed by the processor, implements the steps of the method of the first aspect.

In embodiments of the present application, by receiving a data sequence, wherein the data sequence includes a plurality of types of blocks, and block types include a first flag block, a data block and a second flag block; determining a block having an error from among the first flag block, the data block and the second flag block; and processing the data sequence according to a block type corresponding to the block having an error, a block having an error can be determined from the data sequence and the error in the data sequence is handled according to the type of the block having the error, thereby preventing adverse influence of the error in the data sequence on the data sequence.

### BRIEF DESCRIPTION OF THE DRAWINGS

FIG. 1 is a schematic flow chart of a data processing method provided in embodiments of the present application.
FIG. 2 is a schematic diagram of a low-rate or fine-granularity service encapsulation format provided in embodiments of the present application.
FIG. 3 is a schematic diagram of service encapsulation provided in embodiments of the present application.
FIG. 4 is a schematic diagram of a format of a 64B/66B block provided in embodiments of the present application.
FIG. 5 is a schematic diagram of a format of a control block provided in embodiments of the present application.
FIG. 6 is a schematic diagram of a format of an error block provided in embodiments of the present application.
FIG. 7 is a schematic diagram of service encapsulation provided in embodiments of the present application.
FIG. 8 is a schematic structural diagram of a data sequence provided in embodiments of the present application.
FIG. 9 is a schematic structural diagram of another data sequence provided in embodiments of the present application.
FIG. 10 is a schematic structural diagram of another data sequence provided in embodiments of the present application.
FIG. 11 is a schematic structural diagram of a data processing device provided in embodiments of the present application.
FIG. 12 is a schematic structural diagram of a network-side device provided in embodiments of the present application.

### DETAILED DESCRIPTION

Technical solutions in embodiments of the application will be described clearly and thoroughly below with reference to the accompanying drawings in embodiments of the application. Apparently, the embodiments described are part of the embodiments of the application rather than all of the embodiments. All other embodiments obtained by a person skilled in the art without creative labor based on embodiments in the application should fall within the scope of the application.

The terms "first", "second", and the like in the description and in the claims of the application are used to distinguish between similar objects rather than describing a specific order or a sequence. It is to be understood that data used in such a way may be interchanged where appropriate, whereby embodiments of the application can be implemented in an order other than those illustrated or described herein, the objects distinguished by "first", "second", etc., are generally of one type, and the number of objects is not limited, for example, a first object may refer to one or more first objects. In addition, "and/or" in the description and claims indicates at least one of the objects connected therewith, and the character "/" generally indicates that the objects associated therewith are in an "or" relationship.

The data processing method, network-side device and storage medium provided by embodiments of the application will be described in detail by specific embodiments and application scenarios thereof with reference to the accompanying drawings.

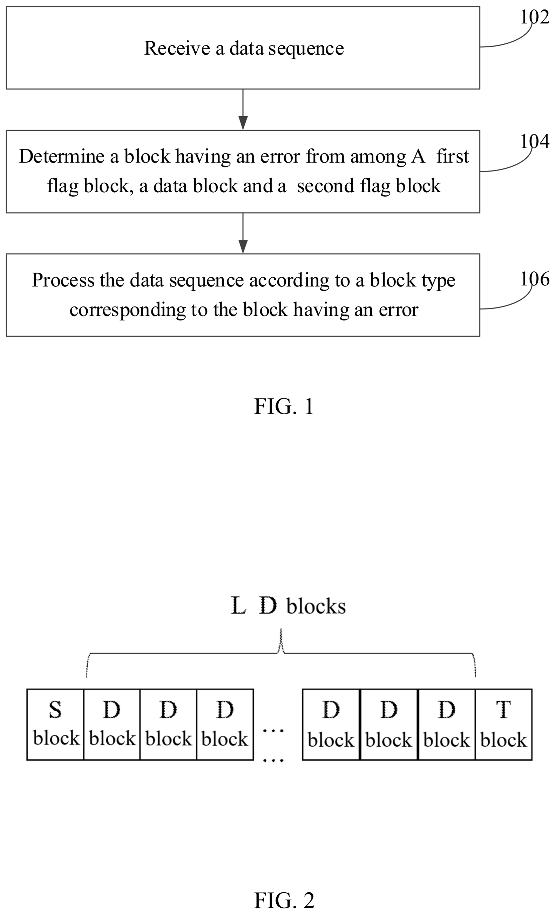

FIG. 1 shows a data processing method provided in an embodiment of the present application, the method may be executed by a network-side device, and the network-side device may include: a server and/or a terminal device. In other words, the method may be executed by a software or hardware installed on the network-side device, and the method includes the following steps.

At step 102: a data sequence is received, wherein the data sequence includes a plurality of types of blocks.

In some cases, the network-side device as a receiving end may receive a data sequence, and service data of a customer service is encapsulated in the data sequence. The data sequence includes a plurality of types of blocks, and block types may include a first flag block, a data block (D block) and a second flag block.

In one implementation, the first flag block is a start block, and the second flag block is a termination block.

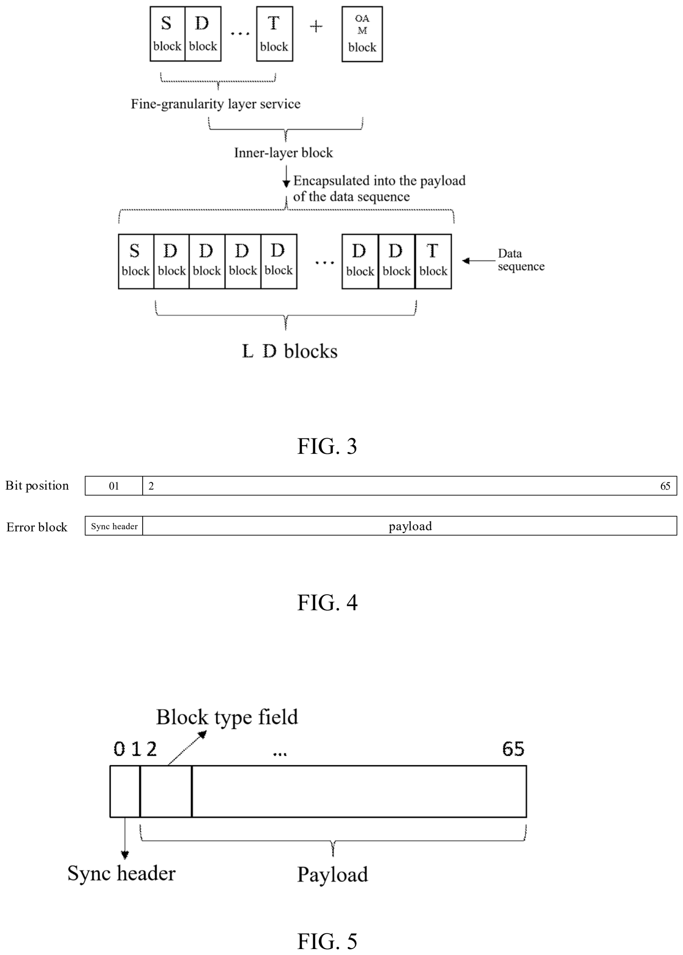

In embodiments of the present application, the first flag block may be a start block (S block), and the second flag block may be a termination block (T block). As shown in FIG. 2, one first flag block (S block), L data blocks (D block) and one second flag block (T block) together constitute a complete data sequence, that is, a 64-bit/66-bit (64B/66B) block with a fixed length of L+2. L is an integer greater than or equal to 1, the first flag block (start block) indicates start of the data sequence, and the second flag block (termination block) indicates termination of the data sequence. In addition, it is a service demand at present to provide low-latency, hard-isolated bearer technology for low-rate, fine-granularity layer service (Ethernet customer service). As shown in FIG. 3, after adding information such as overhead, OAM message, etc., to the fine-granularity layer service, an inner-layer block is obtained. The fine-graduality layer service may also consist of one S block, L D blocks and one T block. As shown in FIG. 3, the inner-layer block includes a fine-granularity layer service and an OAM block, and the inner-layer block may be encapsulated into payload of the data sequence.

At step 104: a block having an error is determined from among the first flag block, the data block and the second flag block.

In some cases, when abnormity occurs in the network, there may be an erroneous block, such as a block with a bit error or an error block, in the data sequence. In embodiments of the present application, a block having an error needs to be determined from among the first flag block, the data block and the second flag block.

At step 106: the data sequence is processed according to a block type corresponding to the block having an error.

In some cases, after the block having an error is determined from the data sequence, the block type corresponding to the block having an error needs to be determined, that is, whether the block having an error is a first flag block, a second flag or a data block needs to be determined, and the data sequence is processed correspondingly according to the block type corresponding to the block having an error.

In the data processing method provided in embodiments of the present application, by receiving a data sequence, wherein the data sequence includes a plurality of types of blocks, determining a block having an error from among the first flag block, the data block and the second flag block, and processing the data sequence according to a block type corresponding to the block having an error, the error in the data sequence can be handled, and adverse influence of the error in the data sequence on use of the data sequence can be prevented.

In one implementation, determining a block having an error from among the first flag block, the data block and the second flag block includes that: a block having a sync header error is determined from among the first flag block, the data block and the second flag block as the block having an error; or a block having a type field error is determined from among the first flag block and the second flag block as the block having an error.

According to the format of a 64B/66B block shown in FIG. 4, 2 bits serve as a sync header and 64 bits serve as payload. The 2-bit sync header is 0b01, indicating that the 64B/66B block is a data block. The 2-bit sync header is 0b10, indicating that the 64B/66B block is a control block. The control block may include an S block, a T block, an O block, etc. The control block shown in FIG. 5 may be distinguished by different values in the block type field (1 byte), for example, 0x78 represents an S block, 0x87 represents a T0 block, 0xFF represents a T7 block, and 0x4B represents an O block.

In embodiments of the present application, a block having a sync header error may be determined from among the first flag block, the data block and the second flag block as the above-mentioned block having an error, or a block having a type field error may be determined from among the first flag block and the second flag block as the above-mentioned block having an error.

In this way, by determining whether the sync header of a block is erroneous, the block having an error may be determined from among the first flag block, the data block and the second flag block; by determining whether the type field of a block is erroneous, the block having an error may be determined from among the first flag block and the second flag block, and further the block having an error can be processed, which can prevent the block having an error from adversely affecting the data sequence.

In one implementation, prior to processing the data sequence according to a block type corresponding to the block having an error, the method further includes: the block type is determined according to an expected position of a 64B/66B block.

In embodiments of the present application, prior to processing the data sequence according to a block type corresponding to the block having an error, the block type may also be determined according to an expected position of the 64B/66B block. In some cases, the expected position may be determined by one or more of the following ways.
(1) The length of the data sequence.
(2) The structure of the data sequence.
(3) The overhead of the data sequence.
(4) A sync header of the start block (S block), data block (D block), and termination block (T block).
(5) The types of the start block (S block), data block (D block), and termination block (T block).
(6) The order of the start block (S block), data block (D block), and termination block (T block).

In one implementation, determining the block type according to an expected position of a 64B/66B block includes that: a type of a previous 64B/66B block or a type of a next 64B/66B block is determined according to a type of the current 64B/66B block, or a type of the 64B/66B block is determined according to whether the 64B/66B block comprises an overhead, or a type of the 64B/66B block is determined according to the structure of a data sequence, or a type of the 64B/66B block is determined according to the length of a data sequence.

In embodiments of the present application, a type of a previous 64B/66B block or a type of a next 64B/66B block may be determined according to a type of the current 64B/66B block. A type of the 64B/66B block may also be determined according to whether the 64B/66B block includes an overhead. Or a type of the 64B/66B block is determined according to a structure of a data sequence, or a type of the 64B/66B block is determined according to a length of a data sequence. As an example, after a network-side device receives a data sequence, if a T block of a previous data sequence is correct and the next received 64B/66B block is neither an Idle block nor an O block, the block received at the expected position may be determined as a first flag block (S block) according to the block type and order. As another example, if the current block is a first flag block (start block), then the next block is expected to be a data block (according to the structure of the data sequence, the first block is an S block, the second block is a D block, the third block is a D block, and the L+2 block is a T block). In this way, the block type may be determined according to the expected position of the 64B/66B block.

In one implementation, the block type further includes an error block, the method further includes: the error block is determined as a block having an error.

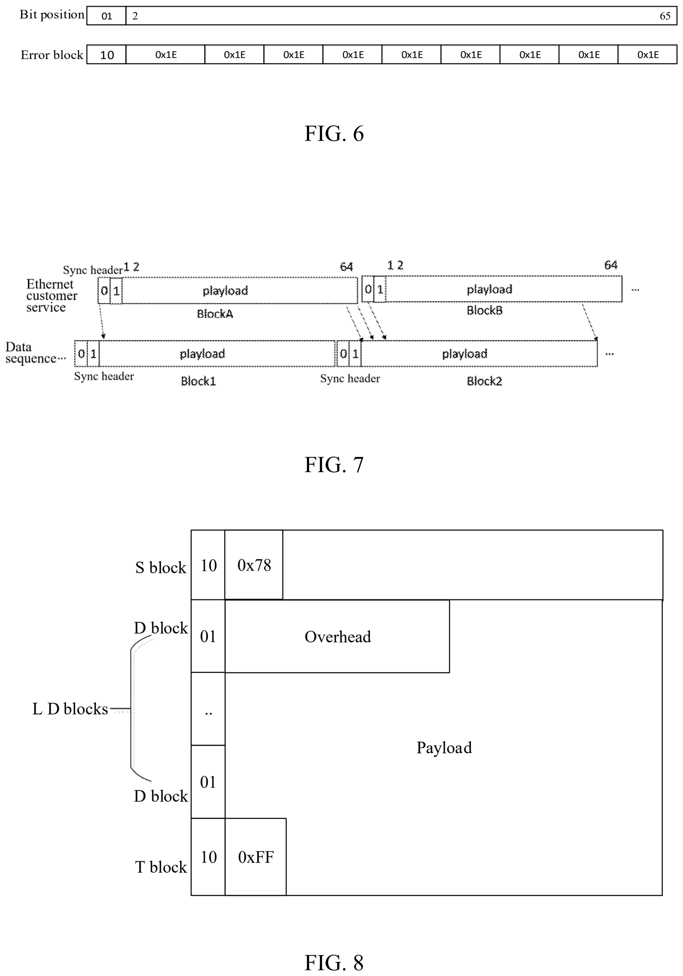

In some cases, the block type further includes error block, due to some anomalies, an outer-layer 64B/66B block may become an error block (as shown in FIG. 6), at this point, the content of an inner-layer 64B/66B block will also be affected. In embodiments of the present application, the error block is also determined as the block having an error. As shown in FIG. 7, the 66B block (such as block A and block B) of the Ethernet customer service is encapsulated into a data sequence (such as block 1 and block 2), and the last 2 bits of block 1 and the first 62 bits of block 2 are encapsulated into the payload of block B. If block B becomes an error block during transmission, both block 1 and block 2 will be affected. In this way, the error block is also determined as a block having an error, and can be processed, so as to prevent the error block adversely affecting the data sequence.

In one implementation, processing the data sequence according to a block type corresponding to the block having an error includes that: upon the condition that a block received at an expected position should a second flag block in the data sequence but is actually an error block in the data sequence, a corresponding inner-layer block or fine-granularity layer service is replaced with the error block when content of the inner-layer block or fine-granularity layer service of the second flag block is recovered; or upon the condition that a block received at an expected position should be a data block in the data sequence but is actually the error block, a corresponding inner-layer block or fine-granularity layer service is replaced with the error block when content of the inner-layer block or fine-granularity layer service of the data block is recovered.

In some cases, if a block received at an expected position is a second flag block in the data sequence, wherein the second flag block may be a termination block, but what actually received is an error block in the data sequence, when content of an inner-layer block or fine-granularity layer service of the second flag block is recovered, that is, when content of an inner-layer block or fine-granularity layer service is extracted from the second flag block, the corresponding inner-layer block or fine-granularity layer service is replaced with the error block. If a block received at an expected position is a data block in the data sequence, but what actually received is the error block, when content of an inner-layer block or fine-granularity layer service of the data block is recovered, the corresponding inner-layer block or fine-granularity layer service may be replaced with the error block. For example, if the 64B/66B block in the data sequence is expected to be a first flag block (start block), but what received is an Error block, then the data sequence is discarded, or the data sequence is continued to be processed, or when the Error block recovers an inner-layer block or fine-granularity layer service, the corresponding inner-layer block (fine-granularity layer service) is replaced with an Error block. When the 64B/66B block in the data sequence recovers an inner-layer block or fine-granularity layer service is recovered and the corresponding inner-layer block (fine-granularity layer service) has a sync header or a type field error, the inner-layer block (fine-granularity layer service) is replaced with an Error block. For another example, if the 64B/66B block in the data sequence is expected to be a data block, but what received is an Error block, then when the Error block recovers an inner-layer block or fine-granularity layer service, the corresponding inner-layer block (fine-granularity layer service) is replaced by an Error block. In this way, if the block received at the expected positions should be a second flag block in the data sequence but is actually an error block in the data sequence or if the block received at the expected positions should be a data block in the data sequence but is actually an error block, the block received at the expected position can be processed.

In one implementation, processing the data sequence according to a block type corresponding to the block having an error includes: upon the condition that a block received at an expected position should a first flag block in the data sequence but is actually an error block, the data sequence is discarded, or other blocks of the data sequence are continued to be processed, or a corresponding inner-layer block or fine-granularity layer service is replaced with an error block when content of the inner-layer block or a fine-granularity layer service of the first flag block is recovered.

In embodiments of the present application, if a block received at an expected position is a first flag block in the data sequence, wherein the first flag block may be a start block, but what actually received is an error block, then the data sequence may be discarded, or other blocks of the data sequence are continued to be processed, or when content of an inner-layer block or fine-granularity layer service of the first flag block is recovered, that is, when content of an inner-layer block or fine-granularity layer service is extracted from the first flag block, the corresponding inner-layer block or fine-granularity layer service may be replaced by an error block. For example, if the 64B/66B block in the data sequence is expected to be a second flag block (termination block), but what received is an Error block, then the data sequence is discarded, or the data sequence continues to be processed, or when the Error block recovers an inner-layer block or fine-granularity layer service, the corresponding inner-layer block (fine-granularity layer service) is replaced by an Error block. In this way, if the block received at the expected positions should be a first flag block in the data sequence but is actually an error block, the block received at the expected position can be processed.

In one implementation, the first flag block contains an overhead, and processing the data sequence according to a block type corresponding to the block having an error includes that: upon the condition that a block type corresponding to the block having an error is a first flag block (the sync header or type field of the received block does not match that of the first flag block), an overhead is extracted from the first flag block; if a cyclic redundancy check in the overhead is correct, the overhead or payload in the first flag block is extracted for processing; or if a cyclic redundancy check in the overhead is incorrect, the data sequence is discarded, or the first flag block is replaced with an error block, or the overhead is discarded and the payload is continued to be processed.

In embodiments of the present application, the first flag block may be a start block, and the first flag block contains an overhead. Upon the condition that the block type corresponding to the block having an error is the first flag block (the sync header or type field of the received block does not match the sync header or type field of the first flag block), the overhead may be extracted from the first flag block, and a cyclic redundancy check (CRC) is performed on the overhead. Cyclic redundancy check is a technology that is used to detect whether the data is transmitted incorrectly by generating a check code during data transmission. If a cyclic redundancy check in the overhead of the first flag block is correct, the overhead or payload in the first flag block may be extracted for processing; or if a cyclic redundancy check in the overhead is incorrect, the data sequence may be discarded, or the first flag block may be replaced with an error block, or the overhead is discarded and the payload is continued to be processed. In this way, when the first flag block contains an overhead and the block type corresponding to the block having an error is the first flag block, the first flag block can be processed.

In one implementation, processing the data sequence according to a block type corresponding to the block having an error includes that : upon the condition that a block type corresponding to the block having an error is the first flag block (the sync header or type field of the received block does not match the sync header or type field of the first flag block), data content is extracted from the first flag block for processing; or the first flag block is replaced with an error block; or a corresponding inner-layer block or fine-granularity layer service is replaced with the error block when content of the inner-layer block or fine-granularity layer service of the first flag block is recovered, replacing.

In some cases, upon the condition that a block type corresponding to the block having an error is determined as a first flag block (start block), data content may be extracted from the first flag block for processing; or the first flag block may be replaced with an error block. When content of an inner-layer block or fine-granularity layer service of the first flag block is recovered, that is, an inner-layer block or fine-granularity layer service is extracted from the first flag block, the corresponding inner-layer block or fine-granularity layer service may be replaced by an error block. For example, if the 64B/66B block in the data sequence is expected to be a first flag block (start block), but the received 64B/66B block is incorrect (the sync header or type field is incorrect, or the sync header or type field does not match the expectation), then one or more of the following operations may be performed: the 64B/66B block is replaced by an Error block; or other blocks of the data sequence are continued to be processed; or when an inner-layer block or fine-granularity layer service of the 64B/66B block is recovered, the corresponding inner-layer block (fine-granularity layer service) is replaced by an Error block; or the data sequence is discarded. In this way, when the block type corresponding to the block having an error is the first flag block, the first flag block can be processed.

In one implementation, processing the data sequence according to a block type corresponding to the block having an error includes that: upon the condition that a block type corresponding to the block having an error is the second flag block (the sync header or type field of the received block does not match the sync header or type field of the second flag block), data content is extracted from the second flag block for processing; or the second flag block is replaced with the error block; or a corresponding inner-layer block or fine-granularity layer service is replaced with an error block when content of the inner-layer block or the fine-granularity layer service of the second flag block is recovered.

In some cases, upon the condition that a block type corresponding to the block having an error is determined as the second flag block (the sync header or type field of the received block does not match the sync header or type field of the second flag block), data content may be extracted from the second flag block for processing; or the second flag block is replaced with an error block. When content of an inner-layer block or fine-granularity layer service of the second flag block is recovered, that is, an inner-layer block or fine-granularity layer service is extracted from the second flag block, the corresponding inner-layer block or fine-granularity layer service may be replaced with an error block. For example, if the 64B/66B block in the data sequence is expected to be a second flag block (termination block), but the received 64B/66B block is incorrect (the sync header or type field is incorrect, or the sync header or type field does not match the expectation), then one or more of the following operations may be performed: the 64B/66B block is replaced with an Error block; or when an inner-layer block or fine-granularity layer service of the 64B/66B block is recovered, the corresponding inner-layer block (fine-granularity layer service) is replaced with an Error block; or the data sequence is discarded. In this way, when the block type corresponding to the block having an error is a second flag block, the block having an error can be processed.

In one implementation, the second flag block contains an overhead, and processing the data sequence according to a block type corresponding to the block having an error includes: upon the condition that a block type corresponding to the block having an error is the second flag block, an overhead is extracted from the second flag block; if a cyclic redundancy check in the overhead is correct, the overhead or payload in the second flag block is extracted for processing; or if a cyclic redundancy check in the overhead is incorrect, the data sequence is discarded, or the second flag block is replaced by the error block, or the overhead is discarded and the payload is continued to be processed.

In some cases, the second flag block (termination block) may also contain an overhead, when it is determined that the block type corresponding to the block having an error is a second flag block, the overhead may be extracted from the second flag block. If a cyclic redundancy check in the overhead is correct, the overhead or payload in the second flag block may be extracted for processing; if a cyclic redundancy check in the overhead is incorrect, the data sequence may be discarded, or the second flag block may be replaced with an error block, or the overhead is discarded and the payload continues to be processed. In this way, when the second flag block contains an overhead and the block type corresponding to the block having an error is a second flag block, the block having an error can be processed.

In one implementation, processing the data sequence according to a block type corresponding to the block having an error includes that: upon the condition that a block type corresponding to the block having an error is a data block (the sync header of the received block does not match the sync header of the data block) and the data block is a first data block in the data sequence, an overhead is extracted from the first data block; if a cyclic redundancy check in the overhead is correct, the overhead or payload in the first data block is extracted for processing; if a cyclic redundancy check in the overhead is incorrect, the data block is replaced by an error block, or the overhead is discarded and the payload continues to be processed; or upon the condition that another data block other than the first data block of the data sequence has an error, data content is extracted from the other data block for processing, or the other data block is replaced with an error block, or when content of an inner-layer block or fine-granularity layer service of the other data block is recovered, the corresponding inner-layer block or fine-granularity layer service is replaced with an error block.

In some cases, upon the condition that a block type corresponding to the block having an error is a data block and the data block is a first data block in the data sequence, an overhead is extracted from the first data block, and whether the cyclic redundancy check in the overhead is correct is determined. If a cyclic redundancy check in the overhead is correct, the overhead or payload in the first data block may be extracted for processing; or if a cyclic redundancy check in the overhead is incorrect, the data block may be replaced with an error block, or the overhead is discarded and the payload continues to be processed.

In addition, upon the condition that other data block other than the first data block of the data sequence has an error, data content is extracted from the other data block for processing, or the other data block having an error is replaced with an error block, or when an inner-layer block or fine-granularity layer service of the other data block is recovered, the corresponding inner-layer block or fine-granularity layer service is replaced by an error block. For example, if the 64B/66B block of the data sequence is expected to be a data block, but the sync header of the received 64B/66B block is erroneous or does not meet the expectation, one or more of the following operations may be performed: the payload content of the 64B/66B block is extracted for processing; or the 64B/66B block is replaced with an Error block; or when an inner-layer block or fine-granularity layer service of the 64B/66B block is recovered, the corresponding inner-layer block (fine-granularity layer service) is replaced by an Error block.

In this way, upon the condition that the block type corresponding to a block having an error is a data block and the data block is the first data block in the data sequence, the data block can be processed; and when another data block other than the first data block in the data sequence has an error, the data block having an error can also be processed.

In one implementation, after processing the data sequence according to a block type corresponding to the block having an error, the method further includes: when an inner-layer block or fine-granularity layer service of the first flag block, the data block or the second flag block is recovered, if the corresponding inner-layer block or fine-granularity layer service has a type field error or a sync header error, the corresponding inner-layer block or fine-granularity layer service is replaced with an error block.

In some cases, after a data sequence is received, an inner-layer block or fine-granularity layer service of the first flag block, the data block or the second flag block is recovered, that is, when the inner-layer block or fine-granularity layer service is extracted from the data sequence, if it is found that the inner-layer block or fine-granularity layer service in the data sequence has a type field error or a sync header error, the above-mentioned inner-layer block or fine-granularity layer service may be replaced by an error block, so as to prevent the erroneous inner-layer block or fine-granularity layer service from adversely affecting the data sequence.

In one implementation, a data format of service data corresponding to the data sequence is a physical coding sublayer data format, the service data includes a plurality of data blocks, the first flag block and the second flag block of the data sequence contain at least one data block of the service data, and after a block having an error is determined from among the first flag block, the data block and the second flag block, the method further includes that: data content of a data block of service data corresponding to the block having an error is marked as erroneous.

In some cases, in embodiments of the present application, the service data corresponding to the data sequence may be fine-granularity layer service, and the data format of the service data corresponding to the data sequence is also a physical coding sublayer data format, that is, the service data also includes a plurality of data blocks (D block). As shown in FIG. 3, the service data (fine-granularity layer service) needs to be encapsulated into a data sequence, and in the data sequence, the data blocks and the second flag block contain at least one data block of the above-mentioned service data (fine-granularity layer service). After a block having an error is determined from the data sequence, data content of a data block of service data corresponding to the block having an error is marked as erroneous.

In this way, after a block having an error in the data sequence is determined, data content of a data block of service data corresponding to the block having an error can be marked as erroneous, and then the data content marked as erroneous can be processed, so as to prevent the block having an error from adversely affecting on the content of the service data and the use of the service data.

The data processing method provided by embodiments of the present application will be illustrated in detail by specific embodiments.

### Embodiment 1:

FIG. 8 shows a schematic structural diagram of a data sequence encapsulated with service data provided in embodiments of the present application. As shown in FIG. 2, a data sequence consists of one first flag block (S block), L data blocks (D block), and one second flag block (T block), wherein L is an integer greater than or equal to 1, and the overhead is placed in the first data block. The data processing method includes the following steps.

At step 1: A network-side device receives a data sequence.

At step 2: If the expected position is a first flag block, then the next block is expected to be a data block (according to the structure of the data sequence, the first block is an S block, the second block is a D block, the third block is a D block, and the L+2 block is a T block).

If the expected position is a first flag block and the first flag block of the received data sequence is incorrect (the sync header of the received block is not 0b10 and/or the type field of the received block is not 0x78), then the first flag block is replaced by an Error block; or when an inner-layer block or a fine-granularity layer service of the first flag block is recovered, the corresponding inner-layer block (fine-granularity layer service) is replaced by an Error block.

At step 3: If the expected position is a data block, but the data block is a block having an error, then:
(1) If the expected position is a data block, but the Sync header of the data block is incorrect (the sync header of the received block is not 0b10), then the overhead in the data block is extracted. If a CRC in an overhead is correct, the overhead or payload in the data block may be extracted for processing; or if a CRC in an overhead is incorrect, the data block is replaced by an Error block, or the overhead is discarded and the payload continues to be processed.
(2) Or if the expected position is a data block, but the Sync header of the data block is incorrect, one of the following operations may be performed.

The data content of the data block is extracted for processing, or the data block is replaced by an Error block, or when the data block recovers an inner-layer block or fine-granularity layer service, a corresponding inner-layer block (fine-granularity layer service) is replaced by an Error block.

At step 4: The next 64B/66B block after the first data block is expected to be a data block, then:
(1) If the expected position is a data block, but the data block is an Error block, then when an inner-layer block or fine-granularity layer service of the data block is recovered, the corresponding inner-layer block (fine-granularity layer service) is replaced by an Error block.
(2) If the expected position is a data block, but the Sync header of the data block is incorrect, then the data content of the data block is extracted for processing; or the data block is replaced by an Error block; or when an inner-layer block or fine-granularity layer service of the data block is recovered, the corresponding inner-layer block (fine-granularity layer service) is replaced by an Error block.

At step 5: According to the length of the data sequence, whether the type of the next 64B/66B block is expected to be a data block or a second flag block is determined (according to the structure of the data sequence, the first block is an S block, the second block is a D block, the third block is a D block, and the L+2 block is a T block). If it is a data block, step 4 is repeated; or if it is a second flag block, step 6 is performed.

At step 6: If the expected position is a second flag block, but the second flag block is a block having an error, then:
(1) If the expected position is a second flag block, but the second flag block is an Error block, then when content of an inner-layer block or fine-granularity layer of the second flag block is recovered, the corresponding inner-layer block (fine-granularity layer service) is replaced by an Error block.
(2) If the expected position is a second flag block, but the sync header of the second flag block is incorrect (the sync header of the received block is not 0b10), then the data content of the second flag block is extracted for processing; or the block is replaced by an Error block; or when content of an inner-layer block or fine-granularity layer of the second flag block is recovered, the corresponding inner-layer block (fine-granularity layer service) is replaced by an Error block.
(3) If the expected position is a second flag block, but the type field of the second flag block is incorrect (the type field of the received block does not match that of the second flag block), then the data content of the second flag block is extracted for processing; or the block is replaced by an Error block; or when content of an inner-layer block or fine-granularity layer of the second flag block is recovered, the corresponding inner-layer block (fine-granularity layer service) is replaced by an Error block.

### Embodiment 2:

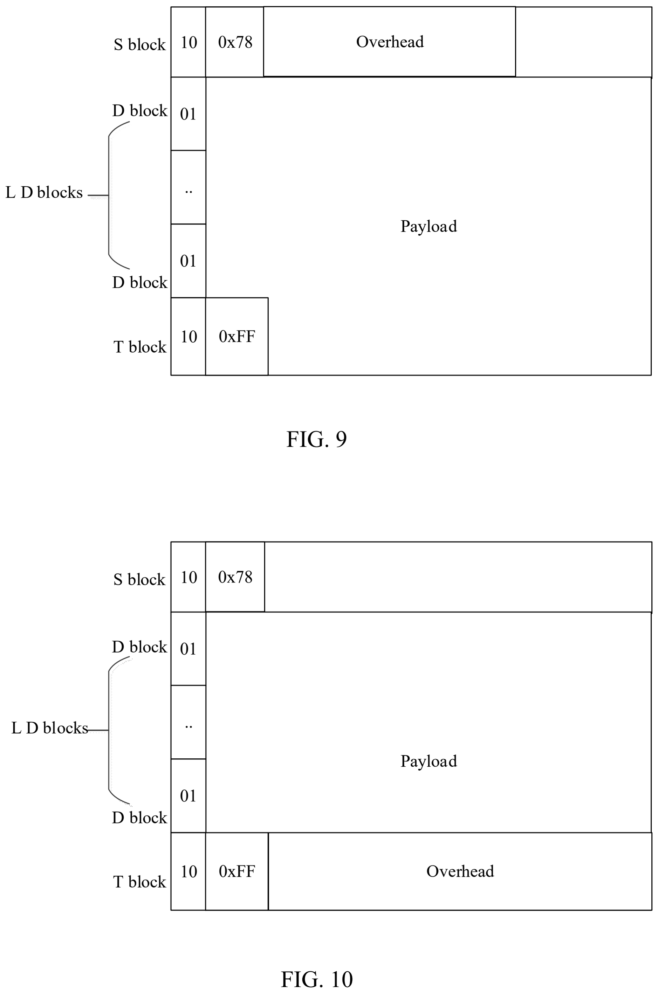

FIG. 9 shows a schematic structural diagram of a data sequence encapsulated with service data provided in embodiments of the present application. As shown in FIG. 9, a data sequence consists of one first flag block (S block), L data blocks (D block), and one second flag block (T block), wherein L is an integer greater than or equal to 1, and an overhead is placed in the first flag block. The data processing method includes the following steps.

At step 1: A network-side device receives a data sequence.

At step 2: If a T block of a previous data sequence is correct and the next received 64B/66B block is neither an Idle block nor an O block, then according to the block type and order, the block expected to be received is determined to be a first flag block (S block). If the first flag block is a block having an error, then:
(1) If the expected position is a first flag block, but the first flag block is an Error block, then other blocks of the data sequence are continued to be processed or the data sequence is discarded.
(2) If the expected position is a first flag block, but the sync header of the first flag block is incorrect, then the overhead in the first flag block is extracted. If a CRC in the overhead is correct, the overhead or payload in the first flag block may be extracted for processing; or if a CRC in the overhead is incorrect, the data sequence is discarded, or the first flag block is replaced by an Error block, or the overhead is discarded and the payload is continued to be processed.
(3) If the expected position is a first flag block, but the type field of the first flag block is incorrect, then the overhead is extracted. If a CRC in the overhead is correct, the overhead or payload in the first flag block may be extracted for processing; or if a CRC in the overhead is incorrect, the data sequence is discarded, or the first flag block is replaced by an Error block, or the overhead is discarded and the payload continues to be processed.

At step 3: The next 64B/66B block after the first flag block is expected to be a data block, then:
(1) If the expected position is a data block, but the data block is an Error block, then when content of an inner-layer block or fine-granularity layer of the data block is recovered, the corresponding inner-layer block (fine-granularity layer service) is replaced by an Error block.
(2): If the expected position is a data block, but the Sync header of the data block is incorrect, one of the following operations may be performed.

The data content of the data block is extracted for processing, or the data block is replaced by an Error block, or when an inner-layer block or fine-granularity layer service of the data block is recovered, the corresponding inner-layer block (fine-granularity layer service) is replaced by an Error block.

At step 4: According to the length of the data sequence, whether the type of the next 64B/66B block is expected to be a data block or a second flag block is determined. If it is a data block, step 3 is repeated; or if it is a second flag block, step 5 is performed.

At step 5: If the expected position is a second flag block, but the second flag block is a block having an error, then:
(1) If the expected position is a second flag block, but the second flag block is an Error block, then when content of an inner-layer block or fine-granularity layer of the second flag block is recovered, the corresponding inner-layer block (fine-granularity layer service) is replaced by an Error block.
(2) If the expected position is a second flag block, but the sync header of the second flag block is incorrect, then the data content of the second flag block is extracted for processing; or the second flag block is replaced by an Error block; or when content of an inner-layer block or fine-granularity layer of the second flag block is recovered, the corresponding inner-layer block (fine-granularity layer service) is replaced by an Error block.
(3) If the expected position is a second flag block, but the type field of the second flag block is incorrect, then the data content of the second flag block is extracted for processing; or the second flag block is replaced by an Error block; or when content of an inner-layer block or fine-granularity layer of the second flag block is recovered, the corresponding inner-layer block (fine-granularity layer service) is replaced by an Error block.

### Embodiment 3:

FIG. 10 shows a schematic structural diagram of a data sequence encapsulated with customer service data provided in embodiments of the present application. As shown in FIG. 10, a data sequence consists of one first flag block (S block), L data blocks (D block), and one second flag block (T block), wherein L is an integer greater than or equal to 1, and an overhead is placed in the second flag block. The data processing method includes the following steps.

At step 1: A network-side device receives a data sequence.

At step 2: If a second flag block of a previous data sequence is correct and the next received 64B/66B block is neither an Idle block nor an O block, then the block expected to be received is a first flag block. If the received first flag block is a block having an error, then:
(1) If the expected position is a first flag block, but the first flag block is an Error block, then the data sequence is discarded, or the subsequent data blocks and the second flag block are continued to be processed.
(2) If the expected position is a first flag block, but the sync header of the first flag block is incorrect, then the data sequence is discarded, or the first flag block is replaced by an Error block; or when an inner-layer block or fine-granularity layer service of the first flag block is recovered, the corresponding inner-layer block (fine-granularity layer service) is replaced by an Error block.
(3) If the expected position is a first flag block, but the type field of the first flag block is incorrect, then the data sequence is discarded or the first flag block is replaced by an Error block; or when an inner-layer block or fine-granularity layer service of the first flag block is recovered, the corresponding inner-layer block (fine-granularity layer service) is replaced by an Error block.

At step 3: The next 64B/66B block after the first flag block is expected to be a data block, then:
(1) If the expected position is a data block, but the data block is an Error block, then when content of an inner-layer block or fine-granularity layer of the data block is recovered, the corresponding inner-layer block (fine-granularity layer service) is replaced by an Error block.
(2) If the expected position is a data block, but the sync header of the data block is incorrect, the data content of the data block is extracted for processing; or the data block is replaced by an Error block; or when an inner-layer block or fine-granularity layer service of the data block is recovered, the corresponding inner-layer block (fine-granularity layer service) is replaced by an Error block.

At step 4: According to the length of the data sequence, whether the type of the next 64B/66B block is expected to be a data block or a second flag block is determined. If it is a data block, step 3 is repeated; if it is a second flag block, step 5 is performed.

At step 5: If the expected position is a second flag block, but the second flag block is a block having an error, then:
(1) If the expected position is a second flag block, but the second flag block is an Error block, then the data sequence may be discarded, or when content of an inner-layer block or fine-granularity layer of the second flag block is recovered, the corresponding inner-layer block (fine-granularity layer service) is replaced by an Error block.
(2) If the expected position is a second flag block, but the sync header of the second flag block is incorrect, then the overhead in the second flag block is extracted. If a CRC in the overhead is correct, the overhead or payload in the second flag block may be extracted for processing; or if a CRC in the overhead is incorrect, the data sequence may be discarded, or the second flag block is replaced by an Error block; or the overhead is discarded and the payload is continued to be processed.
(3) If the expected position is a second flag block, but the type field of the second flag block is incorrect, then the overhead in the second flag block is extracted. If a CRC in the overhead is correct, the overhead or payload in the second flag block may be extracted for processing; or if a CRC in the overhead is incorrect, the data sequence may be discarded, or the second flag block is replaced by an Error block, or the overhead is discarded and the payload continues to be processed.

It should be noted that, for the data processing method provided in embodiments of the present application, the execution subject may be a data processing device or a control module in the data processing device for executing the data processing method. In embodiment of the present application, the data processing device executing the data processing method is taken as an example, so as to the illustrate the data processing device provided in embodiments of the present application.

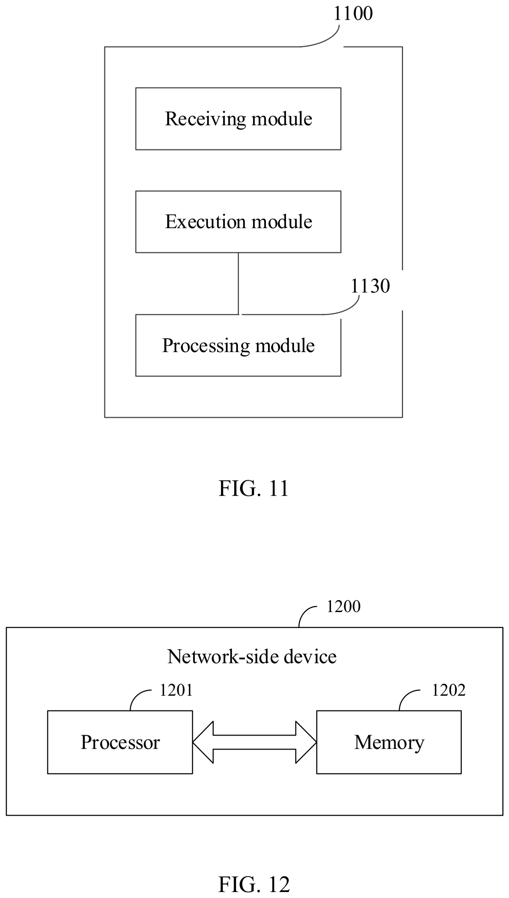

FIG. 11 is a schematic structural diagram of a data processing device according to embodiments of the present application. As shown in FIG. 11, the data processing device 1100 includes a receiving module 1110, an execution module 1120 and a processing module 1130.

The receiving module 1110 is used to receive a data sequence, wherein the data sequence includes a plurality of types of blocks, and block types include a first flag block, a data block and a second flag block; the execution module 1120 is used to determine a block having an error from among the first flag block, the data block and the second flag block; and the processing module 1130 is used to process the data sequence according to a block type corresponding to the block having an error.

In one implementation, the execution module 1120 is used to determine a block having a sync header error from among the first flag block, the data block and the second flag block, as the block having an error; or determine a block having a type field error from among the first flag block and the second flag block as the block having an error.

In one implementation, the execution module 1120 is further used to determine the block type according to an expected position of a 64B/66B block.

In one implementation, the execution module 1120 is used to determine a type of a previous 64B/66B block or a type of a next 64B/66B block according to a type of a current 64B/66B block, or determine a type of the 64B/66B block according to whether the 64B/66B block comprises an overhead, or determine a type of the 64B/66B block according to a structure of a data sequence, or determine a type of the 64B/66B block according to a length of a data sequence.

In one implementation, the block type further includes an error block, and the execution module 1120 is further used to determine the error block as a block having an error.

In one implementation, the processing module 1130 is used to, upon the condition that a block received at an expected position should be a second flag block in the data sequence but is actually an error block in the data sequence, replace a corresponding inner-layer block or fine-granularity layer service with an error block when content of the inner-layer block or fine-granularity layer service of the second flag block is recovered ; or upon the condition that a block received at the expected position should be a data block in the data sequence but is actually an error block, replace a corresponding inner-layer block or fine-granularity layer service with an error block when content of the inner-layer block or fine-granularity layer service is of the data block recovered .

In one implementation, the processing module 1130 is used to, upon the condition that a block received at the expected position should be a first flag block in the data sequence but is actually an error block, discard the data sequence, or continue to process other blocks of the data sequence, or replace a corresponding inner-layer block or fine-granularity layer service with the error block when content of the inner-layer block or a fine-granularity layer service of the first flag block is recovered.

In one implementation, the first flag block contains an overhead, the processing module 1130 is used to, upon the condition that the block type corresponding to the block having an error is a first flag block, extract an overhead from the first flag block; and if a cyclic redundancy check in the overhead is correct, extract the overhead or payload in the first flag block for processing; or if a cyclic redundancy check in the overhead is incorrect, discard the data sequence or replace the first flag block with an error block, or discard the overhead and continue to process the payload.

In one implementation, the processing module 1130 is used to, upon the condition that the block type corresponding to the block having an error is the first flag block, extract data content from the first flag block for processing; or replace the first flag block with an error block; or replace the corresponding inner-layer block or fine-granularity layer service with an error block when content of the inner-layer block or the fine-granularity layer service of the first flag block is recovered.

In one implementation, the processing module 1130 is used to, upon the condition that the block type corresponding to the block having an error is a second flag block, extract data content from the second flag block for processing; or replace the second flag block with the error block; or replace the corresponding inner-layer block or fine-granularity layer service with an error block when content of the inner-layer block or the fine-granularity layer service of the second flag block is recovered.

In one implementation, the second flag block contains an overhead, the processing module 1130 is used to, upon the condition that a block type corresponding to the block having an error is the second flag block, extract an overhead from the second flag block; and if a cyclic redundancy check in the overhead is correct, extract the overhead or payload in the second flag block for processing; or if a cyclic redundancy check in the overhead is incorrect, discard the data sequence, or replace the second flag block with an error block, or discard the overhead and continue to process the payload.

In one implementation, the processing module 1130 is used to, upon the condition that a block type corresponding to the block having an error is a data block and the data block is a first data block in the data sequence, extract an overhead from the first data block; and if a cyclic redundancy check in the overhead is correct, extract the overhead or payload in the first data block for processing; or if a cyclic redundancy check in the overhead is incorrect, replace the data block with an error block, or discard an overhead and continue to process a payload; or upon the condition that another data block other than the first data block in the data sequence has an error, extract data content from the other data block for processing, or replace the other data block with an error block, or replace a corresponding inner-layer block or fine-granularity layer service with an error block when content of the inner-layer block or fine-granularity layer service of the other data block is recovered.

In one implementation, a data format of service data corresponding to the data sequence is a physical coding sublayer data format, the service data includes a plurality of data blocks, the first flag block and the second flag block of the data sequence contain at least one data block of the service data, and the processing module 1130 is further used to mark data content of a data block of service data corresponding to the block having an error as erroneous.

In one implementation, the processing module 1130 is further used to, if a corresponding inner-layer block or fine-granularity layer service has a type field error or a sync header error when the inner-layer block or fine-granularity layer service of the first flag block, the data block or the second flag block is recovered, replace the corresponding inner-layer block or fine-granularity layer service with an error block.

In one implementation, the first flag block is a start block, and the second flag block is a termination block.

The data processing device in embodiments of the present application may be a device, or a component, integrated circuit, or chip in a terminal. The device may be a mobile electronic device or a non-mobile electronic device. Exemplarily, the mobile electronic device may be a mobile phone, a tablet computer, a laptop computer, a PDA, an vehicle electronic device, a wearable device, an ultra-mobile personal computer (UMPC), a netbook, or a personal digital assistant (PDA), etc.; the non-mobile electronic device may be a server, a network attached storage (NAS), a personal computer (PC), a television (TV), a teller machine or a self-service machine, etc., which is not specifically limited in embodiments of the present application.

The data processing device in embodiments of the present application may be a device with an operating system. The operating system may be an Android operating system, or an ios operating system, or other possible operating systems, which is not specifically limited in embodiments of the present application.

The data processing device provided in embodiments of the present application can implement various procedures implemented by the method embodiment of FIG. 1, to avoid repetition, it will not be repeated here.

Optionally, as shown in FIG. 12, embodiments of the present application further provide an network-side device 1200, including a processor 1201 and a memory 1202, the memory 1202 stores a program or instruction executable on the processor 1201, and the program or instruction, when executed by the processor 1201, implements the following steps: receiving a data sequence, wherein the data sequence includes a plurality of types of blocks, and block types include a first flag block, a data block and a second flag block; determining a block having an error from among the first flag block, the data block and the second flag block; and processing the data sequence according to a block type corresponding to the block having an error.

In one implementation, a block having a sync header error is determined from among the first flag block, the data block and the second flag block as the block having an error; or a block having a type field error is determined from among the first flag block and the second flag block as the block having an error.

In one implementation, prior to processing the data sequence according to the block type corresponding to the block having an error, the block type is determined according to an expected position of a 64B/66B block.

In one implementation, a type of a previous 64B/66B block or a type of a next 64B/66B block is determined according to a type of a current 64B/66B block, or a type of the 64B/66B block is determined according to whether the 64B/66B block comprises an overhead, or a type of the 64B/66B block is determined according to a structure of a data sequence, or a type of the 64B/66B block is determined according to a length of a data sequence.

In one implementation, the block type further includes an error block, and the error block is determined as a block having an error.

In one implementation, upon the condition that a block received at an expected position should be a second flag block in the data sequence but is actually an error block in the data sequence, a corresponding inner-layer block or fine-granularity layer service is replaced with an error block when content of an inner-layer block or fine-granularity layer service of the second flag block is recovered; or upon the condition that a block received at an expected position should be a data block in the data sequence but is actually an error block, the corresponding inner-layer block or fine-granularity layer service is replaced with the error block when content of an inner-layer block or fine-granularity layer service of the data block is recovered.

In one implementation, upon the condition that a block received at an expected position should a first flag block in the data sequence but is actually an error block, the data sequence is discarded, or other blocks of the data sequence are continued to be processed, or a corresponding inner-layer block or fine-granularity layer service is replaced with the error block when content of an inner-layer block or a fine-granularity layer service of the first flag block is recovered.

In one implementation, the first flag block contains an overhead, upon the condition that a block type corresponding to the block having an error is a first flag block, an overhead in the first flag block is extracted; and if a cyclic redundancy check in the overhead is correct, the overhead or payload in the first flag block is extracted for processing; or if a cyclic redundancy check in the overhead is incorrect, the data sequence is discarded, or the first flag block is replaced with an error block, or the overhead is discarded and the payload continues to be processed.

In one implementation, upon the condition that a block type corresponding to the block having an error is the first flag block, data content in the first flag block is extracted for processing; or the block is replaced with an error block; or a corresponding inner-layer block or fine-granularity layer service is replaced with an error block when content of the inner-layer block or the fine-granularity layer service of the first flag block is recovered.

In one implementation, upon the condition that a block type corresponding to the block having an error is the second flag block, data content in the second flag block is extracted for processing; or the block is replaced with the error block; or a corresponding inner-layer block or fine-granularity layer service is replaced with an error block when content of the inner-layer block or the fine-granularity layer service of the second flag block is recovered.

In one implementation, the second flag block contains an overhead, upon the condition that a block type corresponding to the block having an error is the second flag block, an overhead is extracted from the second flag block; and if a cyclic redundancy check in the overhead is correct, the overhead or payload in the second flag block is extracted for processing; or if a cyclic redundancy check in the overhead is incorrect, the data sequence is discarded, or the second flag block is replaced with an error block, or the overhead is discarded and the payload is continued to be processed.

In one implementation, upon the condition that a block type corresponding to the block having an error is a data block and the data block is a first data block in the data sequence, an overhead is extracted from the first data block; and if a cyclic redundancy check in the overhead is correct, the overhead or payload in the first data block is extracted for processing; or if a cyclic redundancy check in the overhead is incorrect, the data block is replaced by an error block, or the overhead is discarded and the payload is continued to be processed; upon the condition that another data block other than the first data block of the data sequence has an error, data content in the other data block is extracted for processing, or the other data block is replaced with an error block, or a corresponding inner-layer block or fine-granularity layer service is replaced with an error block when content of the inner-layer block or fine-granularity layer service of the other data block is recovered.

In one implementation, a data format of service data corresponding to the data sequence is a physical coding sublayer data format, the service data includes a plurality of data blocks, the first flag block and the second flag block of the data sequence contain at least one data block of the service data, and after a block having an error is determined from among the first flag block, the data block and the second flag block, data content of a data block of service data corresponding to the block having an error is marked as erroneous.

In one implementation, after the data sequence is processed according to a block type corresponding to the block having an error, when an inner-layer block or fine-granularity layer service of the first flag block, the data block or the second flag block is recovered, if a corresponding inner-layer block or fine-granularity layer service has a type field error or a sync header error, the corresponding inner-layer block or fine-granularity layer service is replaced by an error block.

In one implementation, the first flag block is a start block, and the second flag block is a termination block.

The specific execution steps may refer to various steps of the above-mentioned data processing method embodiments, and can achieve the same technical effect, which will not be repeated here to avoid repetition.

It should be noted that the network-side device in embodiments of the present application include a server, a terminal or other devices other than a terminal.

The structure of the above-mentioned network side device does not constitute a limitation on the network-side device, the network-side device may include more or fewer components than those shown in the figures, or a combination of certain components, or different arrangements of components. For example, an input unit may include a graphics processing unit (GPU) and a microphone, and a display unit may configure a display panel in the form of a liquid crystal display, an organic light emitting diode, etc. A user input unit includes at least one of a touch panel and other input devices. A touch panel is also known as a touch screen. Other input devices may include, but are not limited to, a physical keyboard, a function key (such as a volume control key, a switch key, etc.), a trackball, a mouse, and a joystick, which will not be repeated here.

The memory may be used to store a software program and a variety of data. The memory may primarily include a first storage area for storing programs or instructions and a second storage area for storing data, wherein the first storage area may store an operating system, application programs or instructions required by at least one function (such as sound playback function, image playback function, etc.), etc. In addition, the memory may include volatile memory or non-volatile memory, or the memory may include both volatile and non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synch link dynamic random access memory (SLDRAM) and a direct rambus random access memory (DRRAM).

The processor may include one or more processing units; optionally, the processor integrates an application processor and a modem processor, wherein the application processor primarily processes operations related to an operating system, a user interface, and a application program, etc., and the modem processor primarily processes wireless communication signals, such as a baseband processor. It should be understood that the above-mentioned modem processor may not be integrated into the processor.

Embodiment of the present application further provide a readable storage medium storing a program or instruction thereon, and the program or instruction, when executed by the processor, implements the various processes of the data process method provided by the above embodiments, and can achieve the same technical effect, to avoid repetition, it will not be repeated here.

The processor is the processor in the network-side device in the above-mentioned embodiments. The readable storage medium includes computer storage medium, such as ROM, RAM, magnetic disk or optical disk.

It should be noted that, as used herein, the terms "include", "comprise" or any other variations thereof are intended to cover a non-exclusive inclusion, such that a process, method, article, or apparatus that comprises a series of elements not only comprises those elements, but also comprises other elements that are not explicitly listed, or further comprises elements that are inherent to the process, method, article, or apparatus. Without further limitations, an element limited by "comprising a..." does not exclude the presence of other identical elements in the process, method, article, or device that comprises the element. In addition, it should be noted that the scope of the method and device in embodiments of this application is not limited to perform functions in the order shown or discussed, but may also include performing functions in a substantially simultaneous manner or in an opposite order according to the functions involved, for example, the described methods may be performed in a different order than described, and various steps may be added, omitted, or combined. Additionally, features described with reference to certain examples can be combined in other examples.

With the description of the above implementations, those skilled in the art can clearly understand that the above implementation methods can be effected via software and necessary general hardware platforms, as well as hardware, in many cases, the former is the preferred implementation. Based on such understanding, the technical solution of the this application essentially or the part contributing to the prior art may be embodied in the form of a computer software product, the computer software product is stored in a storage medium (such as a ROM/RAM, a magnetic disk, and an optical disk), and comprises a number of instructions for instructing a terminal (which may be a mobile phone, a computer, a server, or a network device) to execute the methods described in various embodiments of this application.

The embodiments of the application are described above in conjunction with the accompanying drawings, but the application is not limited to the above-mentioned particular embodiments that are merely illustrative rather than limiting, a wide variety of forms can be made by a person skilled in the art under teachings of the application without departing from the spirit and scope of the application, and such forms all fall within the scope of the claims.

## Claims

1. A data processing method, comprising:
receiving a data sequence, wherein the data sequence comprises a plurality of types of blocks, and block types comprise a first flag block, a data block and a second flag block;
determining a block having an error from among the first flag block, the data block and the second flag block; and
processing the data sequence according to a block type corresponding to the block having an error.

2. The method according to claim 1, wherein determining the block having an error from among the first flag block, the data block and the second flag block comprises:
determining a block having a sync header error from among the first flag block, the data block and the second flag block as the block having an error; or,
determining a block having a type field error from among the first flag block and the second flag block as the block having an error.

3. The method according to claim 1, wherein prior to processing the data sequence according to the block type corresponding to the block having an error, the method further comprises:
determining the block type according to an expected position of a 64B/66B block.

4. The method according to claim 3, wherein determining the block type according to the expected position of the 64B/66B block comprises:
determining a type of a previous 64B/66B block or a type of a next 64B/66B block according to a type of a current 64B/66B block, or determining a type of the 64B/66B block according to whether the 64B/66B block comprises an overhead, or determining a type of the 64B/66B block according to a structure of a data sequence, or determining a type of the 64B/66B block according to a length of a data sequence.

5. The method according to claim 1, wherein the block type further comprises an error block, the method further comprises:
determining the error block as a block having an error.

6. The method according to claim 3, wherein processing the data sequence according to the block type corresponding to the block having an error comprises:
replacing, upon the condition that a block received at the expected position should be a second flag block in the data sequence but is actually an error block in the data sequence, a corresponding inner-layer block or fine-granularity layer service with an error block when content of the inner-layer block or fine-granularity layer service of the second flag block is recovered; or
replacing, upon the condition that a block received at the expected position should be a data block in the data sequence but is actually the error block, a corresponding inner-layer block or fine-granularity layer service with an error block when content of the inner-layer block or fine-granularity layer service of the data block is recovered.

7. The method according to claim 3, wherein processing the data sequence according to a block type corresponding to the block having an error comprises:
upon the condition that a block received at the expected position should be a first flag block in the data sequence but is actually an error block, discarding the data sequence, or continuing to process other blocks of the data sequence, or replacing a corresponding inner-layer block or fine-granularity layer service with the error block when content of the inner-layer block or a fine-granularity layer service of the first flag block is recovered.

8. The method according to claim 2, wherein the first flag block comprises an overhead, and processing the data sequence according to the block type corresponding to the block having an error comprises:
upon the condition that the block type corresponding to the block having an error is a first flag block, extracting an overhead from the first flag block; and in the case that a cyclic redundancy check in the overhead is correct, extracting the overhead or payload in the first flag block for processing; or in the case that a cyclic redundancy check in the overhead is incorrect, discarding the data sequence, or replacing the first flag block with an error block, or discarding the overhead and continuing to process a payload.

9. The method according to claim 2, wherein processing the data sequence according to the block type corresponding to the block having an error comprises:
upon the condition that the block type corresponding to the block having an error is a first flag block, extracting data content from the first flag block for processing; or replacing the first flag block with an error block; or
replacing a corresponding inner-layer block or fine-granularity layer service with an error block when content of an inner-layer block or fine-granularity layer service of the first flag block is recovered.

10. The method according to claim 2, wherein processing the data sequence according to the block type corresponding to the block having an error comprises:
upon the condition that the block type corresponding to the block having an error is a second flag block, extracting data content from the second flag block for processing; or replacing the second flag block with the error block; or
replacing a corresponding inner-layer block or fine-granularity layer service with an error block when content of the inner-layer block or the fine-granularity layer service of the second flag block is recovered.

11. The method according to claim 2, wherein the second flag block comprises an overhead, and processing the data sequence according to the block type corresponding to the block having an error comprises:
upon the condition that the block type corresponding to the block having an error is the second flag block, extracting an overhead from the second flag block; and in the case that a cyclic redundancy check in the overhead is correct, extracting the overhead or payload in the second flag block for processing; or in the case that a cyclic redundancy check in the overhead is incorrect, discarding the data sequence, or replacing the second flag block with an error block, or discarding the overhead and continuing to process a payload.

12. The method according to claim 2, wherein processing the data sequence according to the block type corresponding to the block having an error comprises:
upon the condition that the block type corresponding to the block having an error is a data block and the data block is a first data block in the data sequence, extracting an overhead from the first data block; and in the case that a cyclic redundancy check in the overhead is correct, extracting the overhead or payload in the first data block for processing; or in the case that a cyclic redundancy check in the overhead is incorrect, replacing the data block with an error block, or discarding an overhead and continuing to process a payload; or
upon the condition that another data block other than the first data block in the data sequence has an error, extracting data content from the other data block for processing, or replacing the other data block with an error block, or replacing a corresponding inner-layer block or fine-granularity layer service with an error block when content of the inner-layer block or fine-granularity layer service of the other data block is recovered.

13. The method according to any one of claims 1-12, wherein a data format of service data corresponding to the data sequence is a physical coding sublayer data format, the service data comprises a plurality of data blocks, the first flag block and the second flag block of the data sequence comprise at least one data block of the service data, and after determining the block having an error from among the first flag block, the data block and the second flag block, the method further comprises:
marking data content of a data block of service data corresponding to the block having an error as erroneous.

14. The method according to claim 1, wherein after processing the data sequence according to the block type corresponding to the block having an error, the method further comprises:
upon the condition that a corresponding inner-layer block or fine-granularity layer service has a type field error or a sync header error when the inner-layer block or fine-granularity layer service of the first flag block is recovered, the data block or the second flag block, replacing the corresponding inner-layer block or fine-granularity layer service with an error block.

15. The method according to claim 1, wherein the first flag block is a start block, and the second flag block is a termination block.

16. A network-side device, comprising a processor and a memory, the memory stores a program or instruction that is executable on the processor, and the program or instruction, when executed by the processor, implements steps of the method according to any one of claims 1-15.

17. A readable storage medium, the readable storage medium stores a program or instruction thereon, and the program or instruction, when executed by the processor, implements steps of the method according to any one of claims 1-15.
